# EUROPEAN PATENT SPECIFICATION

(11) **EP 3 670 401 B1**
(45) Date of publication and mention of the grant of the patent: **12.04.2023**
(21) Application number: 19217984.4
(22) Date of filing: 19.12.2019
(51) Int. Cl.: B65G 47/82

(54) **DEVICE AND METHOD FOR DISPLACING A ROW OF OBJECTS**
VORRICHTUNG UND VERFAHREN ZUM VERSCHIEBEN EINER REIHE VON OBJEKTEN
DISPOSITIF ET PROCÉDÉ POUR DÉPLACER UNE RANGÉE D'OBJETS

(30) Priority: 21.12.2018 BE 201805936
(43) Date of publication of application: 24.06.2020
(73) Proprietor: Ayano Group N.V., 2960 Brecht (BE)
(72) Inventor: MEEUWESEN, Erwin, 2960 Brecht (BE)
(74) Representative: Arnold & Siedsma

(56) References cited:
- EP-A1- 1 847 488
- FR-A1- 2 607 481
- FR-A1- 2 998 282
- US-A- 5 794 756

## Description

### FIELD OF THE TECHNOLOGY

The present invention relates to a device and a method for displacing a row of objects from a starting position on a first belt to an end position on a second belt along a displacement direction.

### PRIOR ART

Without being limited hereto, the invention relates to a device and a method for displacing a row of objects in the application of printing objects, particularly glasses and bottles, wherein the objects are supplied on a first belt ("feed belt") and are displaced to a second belt ("discharge belt" or "removal belt") along a displacement direction.

It is known that in this field the objects are supplied in a row on a first belt and can be displaced automatically onto a second belt. The feed direction of the objects is substantially perpendicular to the displacement direction.

The width of the first belt typically only allows merely one row of substantially identical objects to be supplied along a feed direction for a determined length of time. The supplied objects can comprise a decorative element or print, for instance ceramic ink, and are displaced from the first belt to a second belt, wherein the second belt has a minimum width, this being the length of the displaced row of objects. The second belt transports the displaced rows of objects to for instance an inlet of an oven or kiln.

The displacing of the objects must take place in a safe, efficient and practically continuous manner, wherein the chance of damage to or falling over of objects must be limited to a minimum.

US5794756 discloses an article conveyor and collator system for conveying food packages from a packaging machine from a first conveyor toward a second conveyor. US5794756 discloses a device according to the preamble of claim 1 and a method according to the preamble of claim 10.

An example of a known device of this type is proposed in US 5,092,449. The embodiment of a device described herein (see for instance FIG. 7A of the document) comprises the elements as described in the preamble of claim 1, wherein the embodiment of the device comprises a first structure and a first guide means, and a second structure with a first holder and a second holder. The embodiment of the device further appears to comprise a push bar and a support structure. The device is adapted to push or displace a row of objects from a first belt to a second belt, wherein the distance between the row of objects and the device increases during the displacement.

A drawback of the use of such a device is the large volume taken up by the device in front of the first belt, since, as known, the mechanical components of this device take up a considerable amount of space, both in the longitudinal (or feed direction) and transverse direction (or displacement direction).

Another drawback of the above stated embodiments known in the prior art is that these devices can hardly be modified in accordance with the type or the properties of the objects to be displaced, also because modifications to the different widths of the inlets of commercially available discharge belts are extremely complex and expensive.

Another drawback is that the maintenance of these devices is dangerous because the assigned personnel is directly exposed to the heat of the inlet of the oven during replacing of the push bar.

### DESCRIPTION OF THE INVENTION

The present invention has for its object to overcome the above stated shortcomings, and provides a device for displacing a row of objects from a starting position on a first belt to an end position on a second belt along a displacement direction.

The present invention provides for this purpose a device, comprising:
- a first structure lying in a first plane substantially parallel to the displacement direction, wherein the first structure comprises at least a guide means which extends in a first direction;
- a second structure, comprising
   - a first holder which is adapted to perform an up and downward controlled displacement relative to the first structure, wherein the up and downward controlled displacement is substantially perpendicular to the first direction;
   - a second holder for guiding a controlled sliding movement of the second structure relative to the first structure in the first direction, wherein the second holder is connected to the at least a guide means of the first structure;
- a push bar adapted to push the row of objects from the starting position to the end position, wherein the push bar is attached to the first holder of the second structure;
- a third structure adapted to support the first structure, wherein the third structure comprises anchoring means for mounting the device on a fixed base,
wherein the second holder comprises a first connecting element which is connected at one outer end to the first holder for the purpose of suspending the first holder from the second holder. The advantage of using the first connecting elements for suspending the first holder from the second holder, wherein the second holder is connected to the guide elements of the first structure, is that the device can be placed above at least a part of the first belt and at least a part of the second belt. The space within which the displacement of the objects takes place is hereby clearly set out and freely accessible to personnel, whereby it is possible to intervene easily and quickly if objects have fallen over or have to be removed. The ability to intervene easily and quickly limits both the duration of any downtime, and so of non-production, and the quantity of material lost due to damaged objects. This embodiment moreover allows the displacement of the objects to be performed by means of on the one hand an independent sliding or translating movement (substantially horizontal) of the second structure relative to the first structure and on the other an independent up and downward displacement of the first holder relative to the second holder and first structure, whereby a simple and efficient control of the components for displacing a row of objects is possible, as compared to for instance rotation movements. The height of the first holder, and so of the push bar, relative to the first belt and the second belt for the row of objects can thus be adjusted in simple manner, whereby the device can also be utilized to switch in simple manner between different types of object for displacing.

The first connecting element of the second holder is preferably a retractable and extendable connecting element. This has the advantage that the first holder can once again move easily and quickly to the starting situation after the row of objects has been displaced. Compared to devices wherein the first holder is configured to perform a rotation movement or a scooping movement, this preferred embodiment is more efficient and simpler to operate.

According to a preferred embodiment of the invention, the second structure further comprises a third holder which is connected to a falling safety means, wherein the falling safety means is configured to be placed in front of the row of objects in the displacement direction during displacement of the row of objects from the starting position to the end position, wherein the third holder comprises a second connecting element for suspending the falling safety means from the third holder. Owing to this particular embodiment, the number of objects which fall over during the displacement decreases, whereby there is less breakage of glass and less downtime of the belts is required.

In a particular embodiment of the invention the push bar is provided with a series of recesses, wherein each recess is provided for the purpose of receiving an object from the row of objects. This preferred embodiment allows objects which are supplied at a predetermined speed on the first belt to be displaced at the same mutual distance in controlled manner, without the first belt having to come to a standstill for this purpose. Ensuring the mutual distance of the displaced objects in the feed direction (or X-direction) moreover provides for a greater efficiency in the further processing of the objects. This is because the heat whirls better and more uniformly in the oven, whereby products have fewer burn defects. The objects are furthermore less prone to rubbing against each other, this rubbing resulting in possible damage ("scuff marks").

In a particular embodiment of the invention the device is provided with a first servomotor for controlling the up and downward displacement of the first holder of the second structure. This particular embodiment allows the up and downward movement of the first holder and the displacements of the push bar to be performed in controlled manner, and the displacements to be controlled independently of each other, whereby different types of object can be displaced in accordance with their feed speed.

In a particular embodiment of the invention the device comprises a second servomotor for controlling the sliding movement of the second holder of the second structure relative to the first structure in the first direction. This particular embodiment allows the horizontal sliding movement of the second holder to be performed in controlled manner, and the displacements to be controlled independently of each other, whereby different types of object can be displaced in accordance with their feed speed.

According to the invention, the device comprises a third servomotor which is adapted for a controlled translation of the push bar in contact with the first holder, and wherein the third servomotor is placed on the first holder. This particular embodiment allows objects which are supplied on the first belt at a predetermined speed to be displaced in controlled manner, without the first belt having to come to a standstill for this purpose. This embodiment moreover has the advantage that the push bar can alternately move to the left or the right at the moment of displacement of the objects, whereby the displaced objects can be offset relative to each other. By offsetting the objects a greater density of objects can be obtained on the second belt ("discharge belt"), which results in greater efficiency and faster throughput times in the subsequent processes, for instance heat saving in the oven.

According to a preferred embodiment of the invention, the device comprises a control unit adapted to monitor and control the movements of the first holder, the second holder and the push bar. This computer control unit enables the advancing movement of the push bar to take place at a variable speed (slowly, faster, slowly) so that falling over of the displaced objects due to inertia is limited to a minimum. The computer control unit enables a pause to take place after an adjustable number of displacement sequences, whereby a space is created between different batches of displaced objects, this in order to prevent a domino effect across a large number of bottles if the final row falls over.

Another aspect of the invention is to provide a system for displacing a row of objects from a starting position on a first belt to an end position on a second belt along a displacement direction, wherein the system comprises a device according to at least any one of the above described embodiments, a first belt adapted to supply the row of objects, and a second belt adapted to receive at least one displaced row of objects.

In a particular embodiment of the system according to the present invention the system comprises an oven for fixing an image on a surface of the objects, wherein the oven is provided with an opening for receiving at least a part of the second belt.

Another aspect of the invention is to provide a method for displacing a row of objects from a starting position on a first belt to an end position on a second belt along a displacement direction by means of a device according to any one of the foregoing embodiments, the method comprising of a displacement stage and a return stage, the displacement stage comprising of:
- a1. placing the first holder and the push bar in a pushing position by means of a motorized displacement, controlled by the control unit, wherein the pushing position lies on a first longitudinal side of the row of objects on the first belt, and wherein the first longitudinal side lies opposite a second longitudinal side which lies at the second belt;
- a2. engaging the row of objects on the first belt by means of a motorized displacement, controlled by the control unit, of the first holder in the first direction;
- a3. displacing the row of objects from the first belt to the end position on the second belt by means of a motorized displacement, controlled by the control unit (9), of the second holder along the first direction; and wherein the return stage comprises the steps of:
- a4. the first holder releasing the row of objects in the end position on the second belt by means of a short motorized displacement, controlled by the control unit, of the second holder opposite to the first direction;
- a5. upward displacement by means of a motorized displacement, controlled by the control unit, of the first holder, wherein the upward displacement defines a displacement of the first holder toward the first structure;
- a6. displacement by means of a motorized displacement, controlled by the control unit, of the second holder opposite to the first direction, toward the first longitudinal side of a new supplied row of objects;
- a7. downward displacement by means of a motorized displacement, controlled by the control unit, of the first holder, wherein the downward displacement defines a displacement of the first holder away from the second structure. An advantageous aspect of the use of an embodiment of a device according to any one of the foregoing embodiments of the invention for performing a method according to any one of the foregoing method embodiments of the invention is the use of the first connecting elements for suspending the first holder from the second holder, wherein the second holder is connected to the guide elements of the first structure, in that the device can be placed above at least a part of the first belt and at least a part of the second belt. The space within which the displacement of the objects takes place is hereby clearly set out and freely accessible to manual operators, whereby it is possible to intervene easily and quickly if objects have fallen over or have to be removed. The ability to intervene easily and quickly limits both the duration of any downtime, and so of non-production, and the quantity of material lost due to damaged objects. This embodiment moreover allows the displacement of the objects to be performed by means of on the one hand an independent sliding or translating movement (substantially horizontal) of the second structure relative to the first structure and on the other an independent up and downward displacement of the first holder relative to the second holder and first structure, whereby a simple and efficient control of the components for displacing a row of objects is possible, as compared to for instance rotation movements. The height of the first holder, and so of the push bar, relative to the first belt and the second belt for the row of objects can thus be adjusted in simple manner, whereby the device can also be utilized to switch in simple manner between different types of object for displacing.

In an embodiment of the method according to the present invention the second structure of the device further comprises a third holder adapted to hold a falling safety means, wherein the third holder comprises a second connecting element for suspending the falling safety means from the third holder, the method comprising the steps of:
- a.2.1 displacing the falling safety means on the second longitudinal side of the row of objects downward by means of a motorized displacement, controlled by the control unit, of the third holder after performing step a.2 according to the foregoing embodiment of the method of the invention;
- a.4.1 displacing the falling safety means on the second longitudinal side of the row of objects upward by means of a motorized displacement, controlled by the control unit, of the third holder after performing step a.4 according to the foregoing embodiment of the method of the invention. An advantageous aspect of this embodiment is a reduction of the number of objects which fall over during the displacement, whereby there is less breakage of glass and less downtime of the belts is required.

According to the invention, the device of the method of the present invention comprises a third servomotor adapted for a controlled translation of the push bar in contact with the first holder, and wherein the third servomotor is placed on the first holder, the method comprises the step of sliding the push bar in contact with the first holder over a predetermined distance for the purpose of performing step a.2. This particular embodiment allows controlled displacement of objects which are supplied on the first belt at a predetermined speed, without the first belt having to come to a standstill for this purpose. This embodiment moreover has the advantage that the push bar can alternately move to the left or the right at the moment of displacement of the objects, whereby the displaced objects can be offset relative to each other. By offsetting the objects a greater density of objects can be obtained on the second belt ("discharge belt"), which results in greater efficiency and faster throughput times in the subsequent processes, for instance heat saving in the oven.

Another aspect of the invention is to provide a use of a device for displacing a row of printed objects from a starting position on a first belt to an end position on a second belt along a displacement direction, characterized in that the device is a device according to any one of the foregoing embodiments.

### BRIEF DESCRIPTION OF THE FIGURES

With the intention of describing the features of the invention in detail, a preferred embodiment of a device and a method for displacing a row of objects according to the present invention is described hereinbelow by way of example, without any limitative character and with reference to the accompanying drawings, in which
- Figure 1, also abbreviated to FIG. 1, shows a schematic representation of the device in perspective view;
- Figure 2, also abbreviated to FIG. 2, shows a schematic representation of the device in side view;
- Figure 3, also abbreviated to FIG. 3, shows a schematic representation of the device in perspective view;
- Figure 4, also abbreviated to FIG. 4, shows a schematic representation of the device in top view;
- Figure 5, also abbreviated to FIG. 5, shows a schematic representation of the device in front view.

### DETAILED DESCRIPTION

The following detailed description has the object of describing preferred embodiments of the invention and is not deemed to be a limited representation of the only embodiments in which the invention can occur or be applied. The description endeavours to be clear in respect of the functionalities and steps necessary for constructing and making operative the invention. It must be understood that the same or equivalent functionalities and components can be obtained by other embodiments and that they are also intended to fall within the scope of protection of the invention.

The present invention will be described hereinbelow on the basis of well-defined embodiments and with reference to determined drawings or figures, although the invention is not limited thereto and is defined solely by the claims. The drawings or figures shown here are merely schematic representations, and are not limitative. In the drawings or figures the dimensions of determined components in question may thus not be drawn to scale, this only for purposes of illustration. The dimensions and the relative dimensions do not necessarily correspond to the actual practical embodiments of the invention.

Terms such as "first"," second", "third" and the like are moreover used in the description and in the claims to distinguish between similar elements and not necessarily to indicate a sequential or chronological order. The terms in question are mutually interchangeable in the conditions suitable therefor, and the embodiments of the invention can operate in orders other than those described or illustrated here.

Terms such as "top", "bottom", "above", "below" and the like are furthermore used in the description and in the claims for descriptive purposes and not necessarily to indicate relative positions. The terms used thusly are mutually interchangeable in the conditions suitable therefor, and the embodiments of the invention can operate in orientations other than those described or illustrated here.

The term "comprising" and derivative terms, as are used in the claims, must not be interpreted as being limited to the means stated thereafter in each case; the term does not preclude other elements or steps. The term must be interpreted as a specification of the stated features, whole numbers, steps or components to which reference is made, without however the presence or the addition of one or more additional features, whole numbers, steps or components, or groups thereof, being precluded. The scope of an expression such as "device comprising the means A and B" is then not only limited to devices consisting solely of components A and B. What is conversely meant is that, in respect of the present invention, the only relevant components are A and B.

Where reference is made in an embodiment of the invention to "displacement direction", reference is made to the direction determined by the starting position of the row of objects on a first belt and the end position of the objects on a second belt.

Where reference is made in an embodiment of the invention to "a row of objects", reference is made to objects, such as glasses or bottles, without being limited thereto, which objects are placed in a row and have substantially the same geometrical and material properties, such as height, width, circumference and weight.

Referring to the stated figures, the device according to this invention, generally designated with reference numeral 1, can be used to displace objects from a starting position on a first belt (not shown in the figures) to an end position on a second belt (not shown in the figures). The objects can be manufactured from glass, ceramic material and the like, and comprise a surface which can be decorated. The first belt and the second belt can be separated by a non-movable intermediate surface, wherein this intermediate surface comprises a surface with low friction coefficient.

According to a particular aspect of the invention, device 1 can form part of a system for displacing objects, such as beverage containers, for instance glasses or bottles, manufactured from glassware, ceramic material and the like, wherein the first belt, the intermediate surface and the second belt lie substantially in the same plane, wherein this plane is oriented substantially horizontally. When reference is made in this text to this plane, reference may also be made to the "displacement plane". The feed direction, i.e. the direction in which the first belt displaces the objects, is substantially perpendicular to the discharge direction, i.e. the direction in which the second belt displaces the objects away from the first belt. In a particular aspect of the invention the device can be adapted to displace the row of objects along a displacement direction, which differs from the discharge direction. This has the advantage that the displaced rows of objects on the second belt, i.e. discharge belt, can be positioned offset relative to each other, whereby a greater density of objects can be obtained on the second belt. The objects can then form a type of chessboard pattern in top view.

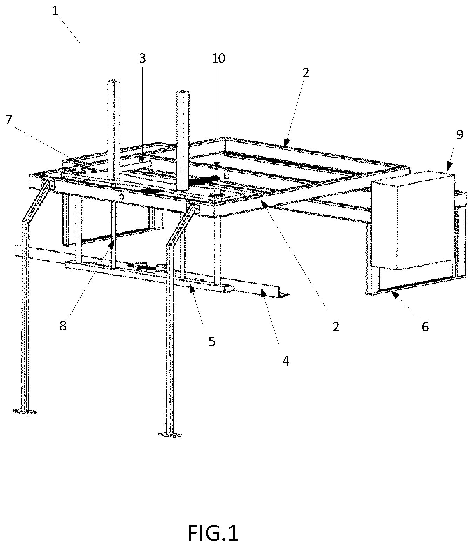

As illustrated in FIG. 1, device 1 comprises a first structure 2 which lies mainly in a first plane, which is substantially parallel to the displacement direction. As a result, a skilled person in the field of the invention will also appreciate that the first plane is substantially parallel to the horizontal plane in which the first belt and second belt lie. In a particular embodiment, as illustrated in FIG. 1, first structure 2 can be an open frame which extends longitudinally in a first direction. The first structure 2, as illustrated in FIG. 1, comprises a transverse component 10 which extends in the width direction, or second direction substantially perpendicularly of the first direction, of first structure 1. The position of this transverse component 10 can limit the distance over which the row of objects can be displaced since the transverse component limits the range of a guide means 3 in the first direction. The position of the transverse component is however not limited to that illustrated in FIG. 1.

First structure 2 also comprises at least a guide means 3 which extends in the first direction. The embodiment, as illustrated in FIG. 1, comprises two guide means which are bounded at an outer end by the outer surfaces of first structure 2 and at the opposite outer end by transverse component 10 which extends in the width direction of first structure 2. The transverse component can be provided with openings for receiving at least a part of the at least one guide means.

The at least one guide means 3 can be a rail or open slot adapted for rail or slot guiding.

In an embodiment of the invention as illustrated in FIG. 1 device 1 comprises a second structure which comprises a first holder 5. First holder 5 is adapted to perform a controlled up and downward displacement relative to first structure 2.

In a particular embodiment of the invention first holder 5 is connected to a servomotor (not shown) for performing an up and downward displacement relative to first structure 2. This displacement can be driven by a servomotor (not shown). The servomotor can be controlled by a control unit 9, which is controlled by processor means associated with a program for controlling the position and the speed of displacement of first holder 5.

First holder 5 is also adapted to receive at least a part of a first connecting element 8. This connecting element is attached to a second holder 7 and is configured to adjust the distance between first holder 5 and second holder 7 before and after displacement of the row of objects. As a result, connecting element 8 can be a telescopic system with retractable and extendable shafts between first holder 5 and second holder 7. The retractability and extendability of the connecting element can be controlled by air pressure pistons or servomotors (not shown), wherein the control can take place by means of control unit 9, which is controlled by processor means associated with a program for controlling the position and the speed of displacement of first holder 5.

The second structure also comprises a second holder for guiding a controlled sliding movement of the second structure relative to first structure 2 in the first direction. Second holder 7 is connected to the at least a guide means 3 of first structure 2. In a specific embodiment of the invention the guide means can be a linear rail or slot extending in the first direction, whereby second holder 7 can perform a linear sliding movement of the second structure relative to first structure 2 during displacement of the row of objects from the first belt to the second belt.

The sliding movement of the second holder can be a displacement controlled by a control unit 9, wherein the motorized displacement can be driven by a servomotor (not shown). According to a preferred embodiment of the invention, control unit 9 can be programmed such that the speed and displacement profile of second holder 7 is independent of the speed and displacement profile of first holder 5.

Device 1 also comprises a push bar or pusher bar 4 which is adapted to push the row of objects from the starting position on the first belt to the end position on the second belt. Push bar 4 can be attached to first holder 5 of the second structure, whereby the movement of push bar 4 can be determined by the movement of first holder 5 relative to first structure 2. As a result, push bar 4 can perform an up and downward movement relative to first structure 2.

According to the invention, push bar 4 is connected to a servomotor (not shown) for the purpose of performing a displacement to the left or to the right relative to the discharge direction or direction of movement of the second belt. In other words, the servomotor can make push bar 4 slide along with the feed direction of the row of objects (i.e. a displacement to the left) or counter to the feed direction of the row of objects (i.e. a displacement to the right) during displacement. The servomotor can be controlled by a control unit 9 which is controlled by processor means associated with a program for controlling the position and the speed of displacement of first holder 5.

In a specific embodiment of the invention push bar 4 can comprise a series of recesses, wherein each recess is provided for the purpose of receiving an object from the row of objects. The recesses can be V- or U-shaped, or a combination thereof, and be placed on the first longitudinal side of the row of objects, which lies opposite the longitudinal side of the row of objects located at the second belt. During displacement of the row of objects the push bar 4 is in a pushing position. Push bar 4 is adapted to make contact with the objects. The profile of the recesses can also be adjusted in accordance with the speed ("feed speed") at which the first belt supplies the row of objects. Because push bar 4 is attached to first holder 5 using fastening means, an operator can switch push bars 4 easily and quickly in accordance with the objects to be displaced.

Device 1 further comprises a third structure 6 which is adapted to support first structure 2. Third structure 6 comprises anchoring means for mounting device 1 on a fixed base. These fastening means can be bolts and nuts which are arranged through perforations in third structure 6 for the purpose of mounting third structure 6 on a fixed base, such as an oven or a floor. In the shown embodiment of the invention first structure 1 rests on third structure 6. The third structure also comprises an open frame which is adapted to receive at least a part of the second belt.

In a particular embodiment of the invention the second structure can comprise a third holder which is adapted to hold a falling safety means (not shown), wherein the falling safety means is configured to be placed in front of the row of objects, i.e. on the second longitudinal side lying opposite the first longitudinal side. The falling safety means is suspended from the third holder, wherein the suspending can be done by connecting means or means as described above. The falling safety means has a length which can be substantially identical to the length of the push bar. The placing of the falling safety means can be a motorized displacement controlled by control unit 9, wherein the speed and displacement profile of the third holder and the falling safety means can be set independently of the speed and displacement profiles of first holder 5 and second holder 7. This has the advantage that a wide range of objects can be treated by a device 1 according to the invention.

An embodiment of the device 1 as illustrated in figure 1 comprises a first structure 2 which lies in a first plane substantially parallel to the displacement direction. First structure 2 comprises at least a guide means 3 which extends in the first direction. Device 1 further comprises a second structure which comprises a first holder 5 and a second holder 7. First holder 5 is adapted to perform an up and downward controlled displacement relative to first structure 2, wherein the up and downward controlled displacement is substantially perpendicular to the first direction. Second holder 7 is adapted to guide a controlled sliding movement of the second structure relative to first structure 2 in the first direction, and is for this purpose connected to at least a guide means 3 of first structure 2. Device 1 further comprises a push bar 4 adapted to push the row of objects from the starting position to the end position, wherein the push bar is attached to the first holder 5 of the second structure. The device also comprises a third structure 6 adapted to support first structure 2, wherein third structure 6 comprises anchoring means for the purpose of mounting device 1 on a fixed base. Second holder 7 comprises a first connecting element 8 which is connected at one outer end to first holder 5 for the purpose of suspending first holder 5 from second holder 7.

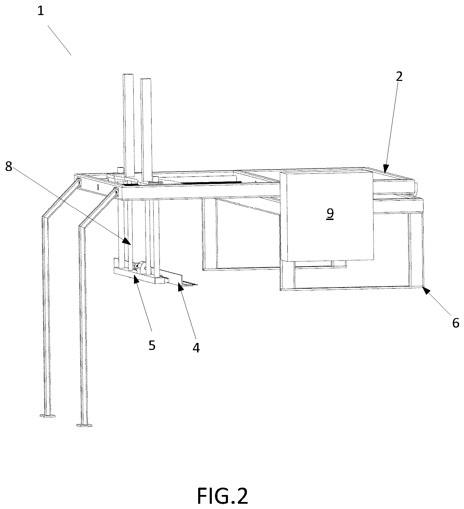

Referring to figure 2, a side view is shown of the device 1 as illustrated in figure 1. The features of the elements shown in figure 2 are the same as described above for figure 1. If the first belt were to be illustrated, it would run in the longitudinal direction of first holder 5 and push bar 4. If the second belt were to be illustrated, it would lie perpendicularly of the first belt and at least a part of the second belt would be received by the half-open frame of third structure 6.

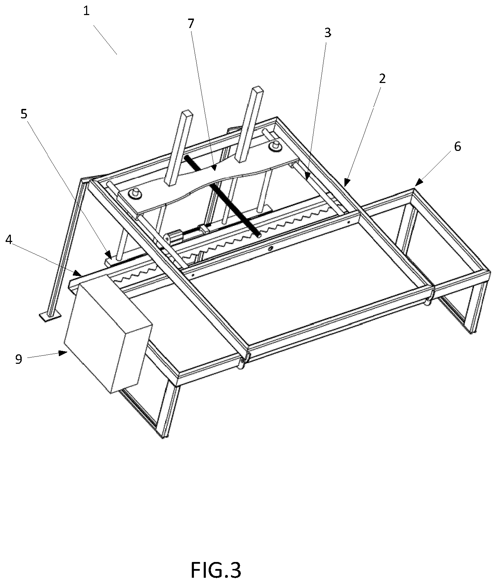

Referring to figure 3, a perspective view of device 1 as illustrated in figure 1 is shown. The features of the elements shown in figure 3 are the same as described above for figure 1. Figure 3 clearly illustrates guide means 3 of first structure 2 for guiding the second holder 7 of the second structure.

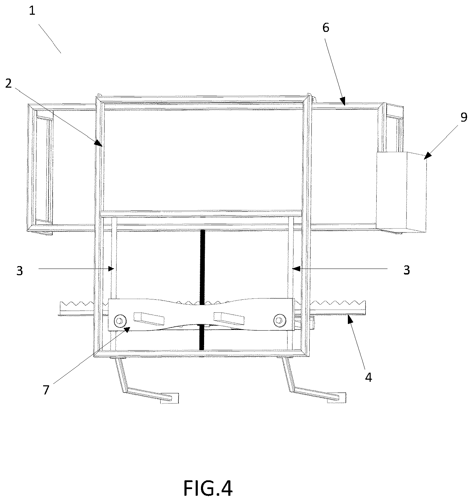

Referring to figure 4, a top view of the device 1 as illustrated in figure 1 is shown. The features of the elements shown in figure 4 are identical as described above for figure 1. Push bar 4 has a series of recesses, wherein each recess is provided to receive an object from the row of objects. The recesses can be V-or U-shaped, or a combination thereof, and be placed on the first longitudinal side of the row of objects, which lies opposite the longitudinal side of the row of objects located at the second belt. During displacement of the row of objects the push bar 4 is in a pushing position. Push bar 4 is adapted to make contact with the objects. The profile of the recesses can also be adjusted in accordance with the speed ("feed speed") at which the first belt supplies the row of objects.

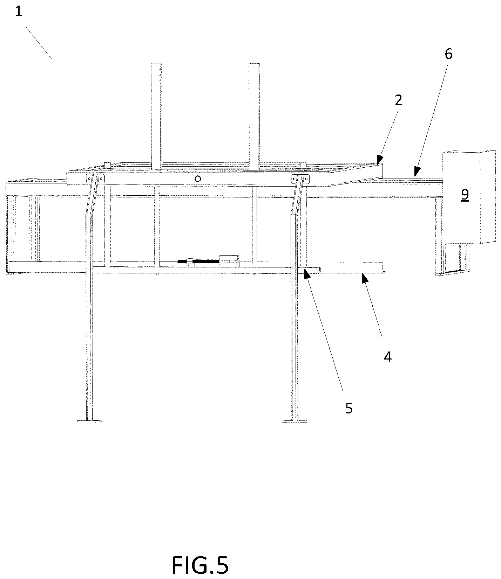

Referring to figure 5, a front view of device 1 as illustrated in figure 1 is shown. The features of the elements shown in figure 5 are the same as described above for figure 1.

The method according to an embodiment of the invention will now be discussed. The method comprises a displacement stage and a return stage. The displacement stage comprises a first step of placing the first holder 5 and push bar 4 in a pushing position by means of a motorized displacement controlled by control unit 9, wherein the pushing position lies on the first longitudinal side of the row of objects on the first belt, and wherein the first longitudinal side lies opposite a second longitudinal side which lies at the second belt. After this, push bar 4 will engage or receive the row of objects. First holder 5 is for this purpose displaced by means of a motorized displacement controlled by the control unit. This motorized displacement can be controlled by a servomotor. After the engaging a displacement of the row of objects from the first belt to the end position on the second belt will take place by means of a motorized displacement, controlled by control unit 9, of second holder 7 along the first direction. The return stage starts as soon as the row of objects reaches the end position on the second belt. The return stage can start with first holder 5 and push bar 4 releasing the row of objects in the end position on the second belt by means of a short motorized displacement, controlled by control unit 9, of second holder 7, opposite to the first direction. This short displacement need only be sufficient to release the row of objects. After this, an upward displacement of first holder 5 and push bar 4 will take place by means of a motorized displacement, controlled by control unit 9, of first holder 5, wherein the upward displacement defines a displacement of the first holder toward first structure 2. In other words, first holder 5 moves to a height above the row of objects so that in a subsequent step, when returning to the starting position, first holder 5 cannot be impeded by the new row of objects being supplied on the first belt. After first holder 5 has been placed at a predetermined height it will be displaced by means of a motorized displacement, controlled by control unit 9, of second holder 7 opposite to the first direction, toward the first longitudinal side of a newly supplied row of objects. Finally, a downward displacement of first holder 5 can take place by means of a motorized displacement, controlled by control unit 9, of the first holder, wherein the downward displacement defines a displacement of first holder 9 away from second structure 1.

The height at which push bar 4 will engage the objects can be entered manually into a control unit 9 but can also be saved in a control program beforehand. The motorized drive means, such as a servomotor, can provide for a correct configuration of the push bar relative to the row of bottles.

According to an embodiment of the method, the method can also be performed wherein the second structure of device 1 further comprises a third holder adapted to hold a falling safety means. The third holder can comprise a second connecting element for suspending the falling safety means from the third holder. In an embodiment of the method wherein device 1 comprises a third holder and a falling safety means a step of downward displacement of the falling safety means will take place by means of a motorized displacement, controlled by control unit 9, of the third holder. In this step the falling safety means will be placed on the second longitudinal side of the row of objects just after push bar 4 has received the row of objects. After the row of objects has been placed in the end position on the second belt an upward displacement of the falling safety means can take place by means of a motorized displacement, controlled by control unit 9, of the third holder, of the falling safety means on the second longitudinal side of the row of objects.

According to the invention, the method also comprise a step of performing a translation of push bar 4 in contact with first holder 5. This movement can be controlled from control unit 9 by means of a servomotor, wherein the third servomotor is placed on first holder 5. This translation can be performed just after the row of objects is engaged by push bar 4.

## Claims

1. Device (1) for displacing a row of objects from a starting position on a first belt to an end position on a second belt along a displacement direction, the device (1) comprising
- a first structure (2) lying in a first plane substantially parallel to the displacement direction, wherein the first structure (2) comprises at least a guide means (3) which extends in a first direction;
- a second structure, comprising
- a first holder (5) which is adapted to perform an up and downward controlled displacement relative to the first structure (2), wherein the up and downward controlled displacement is substantially perpendicular to the first direction;
- a second holder (7) for guiding a controlled sliding movement of the second structure relative to the first structure (2) in the first direction, wherein the second holder (7) is connected to the at least a guide means (3) of the first structure (2);
- a push bar adapted to push the row of objects from the starting position to the end position, wherein the push bar is attached to the first holder (5) of the second structure;
- a third structure (6) adapted to support the first structure (2), wherein the third structure (6) comprises anchoring means for mounting the device (1) on a fixed base,
**characterized in that** the second holder (7) comprises a first connecting element (8) which is connected at one outer end to the first holder (5) for the purpose of suspending the first holder (5) from the second holder (7), and **in that** the device (1) comprises a third servomotor which is adapted for a controlled translation of the push bar (4) in contact with the first holder (5), and wherein the third servomotor is placed on the first holder.

2. Device according to claim 1, **characterized in that** the first connecting element (8) of the second holder (7) is a retractable and extendable connecting element.

3. Device according to any one of the foregoing claims, **characterized in that** the second structure further comprises a third holder which is connected to a falling safety means, wherein the falling safety means is configured to be placed in front of the row of objects in the displacement direction during displacement of the row of objects from the starting position to the end position, wherein the third holder comprises a second connecting element for suspending the falling safety means from the third holder.

4. Device according to any one of the foregoing claims, **characterized in that** the push bar (4) comprises a series of recesses, wherein each recess is provided for the purpose of receiving an object from the row of objects.

5. Device according to any one of the foregoing claims, **characterized in that** the device (1) comprises a first servomotor for controlling the up and downward displacement of the first holder (5) of the second structure.

6. Device according to any one of the foregoing claims, **characterized in that** the device (1) comprises a second servomotor for controlling the sliding movement of the second holder (7) of the second structure relative to the first structure (2) in the first direction.

7. Device according to any one of the foregoing claims, **characterized in that** the device (1) comprises a control unit (9) adapted to manage and control the movements of the first holder (5), the second holder (7) and the push bar (5).

8. System for displacing a row of objects from a starting position on a first belt to an end position on a second belt along a displacement direction, **characterized in that** the system comprises a device (1) as described in any one of the foregoing claims, a first belt adapted to supply the row of objects, and a second belt adapted to receive at least one displaced row of objects.

9. System according to claim 8, further comprising an oven for fixing an image on a surface of the objects, wherein the oven is provided with an opening for receiving at least a part of the second belt.

10. Method for displacing a row of objects from a starting position on a first belt to an end position on a second belt along a displacement direction by means of a device (1) according to any one of the foregoing claims, the method comprising of a displacement stage and a return stage, the displacement stage comprising of:
- a1. placing the first holder (5) and the push bar (4) in a pushing position by means of a motorized displacement, controlled by the control unit (9), wherein the pushing position lies on a first longitudinal side of the row of objects on the first belt, and wherein the first longitudinal side lies opposite a second longitudinal side which lies at the second belt;
- a2. engaging the row of objects on the first belt by means of a motorized displacement, controlled by the control unit (9), of the first holder (5) in the first direction;
- a3. displacing the row of objects from the first belt to the end position on the second belt by means of a motorized displacement, controlled by the control unit (9), of the second holder (7) along the first direction;
wherein the return stage comprises the steps of:
- a4. the first holder (5) releasing the row of objects in the end position on the second belt by means of a short motorized displacement, controlled by the control unit (9), of the second holder (7) opposite to the first direction;
- a5. upward displacement by means of a motorized displacement, controlled by the control unit (9), of the first holder (5), wherein the upward displacement defines a displacement of the first holder (5) toward the first structure (2);
- a6. displacement by means of a motorized displacement, controlled by the control unit (9), of the second holder (7) opposite to the first direction, toward the first longitudinal side of a new supplied row of objects;
- a7. downward displacement by means of a motorized displacement, controlled by the control unit (9), of the first holder (5), wherein the downward displacement defines a displacement of the first holder (5) away from the second structure (2); and
wherein the device (1) comprises a third servomotor adapted for a controlled translation of the push bar (4) in contact with the first holder (5), and wherein the third servomotor is placed on the first holder, the method comprises the step of sliding the push bar (4) in contact with the first holder over a predetermined distance for the purpose of performing step a.2.

11. Method according to claim 10, **characterized in that** the second structure of the device (1) further comprises a third holder adapted to hold a falling safety means, wherein the third holder comprises a second connecting element for suspending the falling safety means from the third holder, the method comprising the steps of:
- a.2.1 displacing the falling safety means on the second longitudinal side of the row of objects downward by means of a motorized displacement, controlled by the control unit (9), of the third holder after performing step a.2 according to claim 10;
- a.4.1 displacing the falling safety means on the second longitudinal side of the row of objects upward by means of a motorized displacement, controlled by the control unit (9), of the third holder after performing step a.4 according to claim 10.

12. Use of a device for displacing a row of printed objects from a starting position on a first belt to an end position on a second belt along a displacement direction, **characterized in that** the device is a device according to any one of the claims 1-7.

## Patentansprüche

1. Vorrichtung (1) zum Verschieben einer Zeile von Gegenständen entlang einer Verschieberichtung von einer Anfangsposition auf einem ersten Band zu einer Endposition auf einem zweiten Band, wobei die Vorrichtung (1) aufweist:
- eine erste Struktur (2), die in einer ersten Ebene im Wesentlichen parallel zu der Verschieberichtung liegt, wobei die erste Struktur (2) zumindest ein Führungsmittel (3) aufweist, das sich in einer ersten Richtung erstreckt;
- eine zweite Struktur, aufweisend
- eine erste Halterung (5), die geeignet ist, relativ zu der ersten Struktur (2) eine gesteuerte Aufwärts- und Abwärtsverschiebung durchzuführen, wobei die gesteuerte Aufwärts- und Abwärtsverschiebung im Wesentlichen senkrecht zu der ersten Richtung erfolgt;
- eine zweite Halterung (7) zum Führen einer gesteuerten Gleitbewegung der zweiten Struktur relativ zu der ersten Struktur (2) in der ersten Richtung, wobei die zweite Halterung (7) mit zumindest einem Führungsmittel (3) der ersten Struktur (2) verbunden ist;
- eine Schiebestange, die geeignet ist, die Zeile von Gegenständen von der Startposition zur Endposition zu schieben, wobei die Schiebestange an der ersten Halterung (5) der zweiten Struktur befestigt ist;
- eine dritte Struktur (6), die geeignet ist, die erste Struktur (2) zu stützen, wobei die dritte Struktur (6) Verankerungsmittel umfasst, zum Anbringen der Vorrichtung (1) an einer festen Basis,
**dadurch gekennzeichnet, dass** die zweite Halterung (7) ein erstes Verbindungselement (8) aufweist, das an einem äußeren Ende mit der ersten Halterung (5) verbunden ist, um die erste Halterung (5) an der zweiten Halterung (7) aufzuhängen, und dass die Vorrichtung (1) einen dritten Servomotor aufweist, der für ein gesteuertes Verschieben der mit der ersten Halterung (5) in Kontakt stehenden Schiebestange (4) geeignet ist, und wobei der dritte Servomotor an der ersten Halterung angeordnet ist.

2. Vorrichtung nach Anspruch 1, **dadurch gekennzeichnet, dass** das erste Verbindungselement (8) der zweiten Halterung (7) ein einfahrbares und ausfahrbares Verbindungselement darstellt.

3. Vorrichtung nach einem der vorherigen Ansprüche, **dadurch gekennzeichnet, dass** die zweite Struktur ferner eine dritte Halterung aufweist, die mit einer Fallsicherungseinrichtung verbunden ist, wobei die Fallsicherungseinrichtung so ausgebildet ist, dass sie während des Verschiebens der Zeile von Gegenständen von der Anfangsposition zur Endposition in der Verschieberichtung vor der Zeile von Gegenständen platziert wird, wobei die dritte Halterung zum Aufhängen der Fallsicherungseinrichtung an der dritten Halterung ein zweites Verbindungselement aufweist.

4. Vorrichtung nach einem der vorherigen Ansprüche, **dadurch gekennzeichnet, dass** die Schiebestange (4) eine Zeile von Ausnehmungen aufweist, wobei jede Ausnehmung zur Aufnahme eines Gegenstandes aus der Zeile der Gegenstände vorgesehen ist.

5. Vorrichtung nach einem der vorherigen Ansprüche, **dadurch gekennzeichnet, dass** die Vorrichtung (1) einen ersten Servomotor aufweist, zur Steuerung der Auf- und Abwärtsverschiebung der ersten Halterung (5) der zweiten Struktur.

6. Vorrichtung nach einem der vorherigen Ansprüche, **dadurch gekennzeichnet, dass** die Vorrichtung (1) einen zweiten Servomotor aufweist, zur Steuerung der Gleitbewegung der zweiten Halterung (7) der zweiten Struktur relativ zur ersten Struktur (2) in der ersten Richtung.

7. Vorrichtung nach einem der vorherigen Ansprüche, **dadurch gekennzeichnet, dass** die Vorrichtung (1) eine Steuereinheit (9) aufweist, die geeignet ist, die Bewegungen der ersten Halterung (5), der zweiten Halterung (7) und der Schiebestange (5) zu steuern und zu kontrollieren.

8. System zum Verschieben einer Zeile von Gegenständen entlang einer Verschieberichtung von einer Anfangsposition auf einem ersten Band zu einer Endposition auf einem zweiten Band, **dadurch gekennzeichnet, dass** das System eine in den vorstehenden Ansprüchen beschriebene Vorrichtung (1) aufweist, sowie ein erstes Band, das geeignet ist, die Zeile von Gegenständen zuzuführen, und ein zweites Band, das geeignet ist, mindestens eine verschobene Zeile von Gegenständen aufzunehmen.

9. System nach Anspruch 8, ferner aufweisend einen Ofen zum Fixieren eines Bildes auf einer Oberfläche der Gegenstände, wobei der Ofen mit einer Öffnung versehen ist, zur Aufnahme zumindest eines Teils des zweiten Bandes.

10. Verfahren zum Verschieben einer Zeile von Gegenständen entlang einer Verschieberichtung von einer Anfangsposition auf einem ersten Band zu einer Endposition auf einem zweiten Band mittels einer Vorrichtung (1) nach einem der vorherigen Ansprüche, wobei das Verfahren einen Verschiebeschritt und einen Rückführschritt umfasst, wobei der Verschiebeschritt folgende Schritte aufweist:
- a1. gesteuertes Anordnen der ersten Halterung (5) und der Schiebestange (4) in einer Schiebeposition durch die Steuereinheit (9) mittels einer motorisierten Verschiebung, wobei sich die Schiebeposition auf einer ersten Längsseite der Zeile von Gegenständen auf dem ersten Band befindet, und wobei sich die erste Längsseite gegenüber einer sich am zweiten Band befindlichen zweiten Längsseite befindet;
- a2. Aufnehmen der Zeile von Gegenständen auf dem ersten Band mittels einer durch die Steuereinheit (9) gesteuerten motorisierten Verschiebung der ersten Halterung (5) in der ersten Richtung;
- a3. Verschieben der Zeile von Gegenständen von dem ersten Band zu der Endposition auf dem zweiten Band mittels einer durch die Steuereinheit gesteuerten (9) motorisierten Verschiebung der zweiten Halterung (7) entlang der ersten Richtung;
wobei der Rückführschritt die folgenden Schritte aufweist:
- a4. Freigeben der Zeile von Gegenständen in der Endposition auf dem zweiten Band mittels einer kurzen durch die Steuereinheit (9) gesteuerten motorisierten Verschiebung der zweiten Halterung (7) entgegen der ersten Richtung durch die erste Halterung (5);
- a5. Aufwärtsverschieben der ersten Halterung (5) mittels einer durch die Steuereinheit (9) gesteuerten motorisierten Verschiebung, wobei das Aufwärtsverschieben eine Verschiebung der ersten Halterung (5) in Richtung der ersten Struktur (2) definiert;
- a6. Verschieben der zweiten Halterung (7) mittels einer durch die Steuereinheit (9) gesteuerten motorisierten Verschiebung entgegengesetzt zur ersten Richtung, in Richtung der ersten Längsseite einer neuen zugeführten Zeile von Gegenständen;
- a7. Abwärtsverschieben der ersten Halterung (5) mittels einer durch die Steuereinheit (9) gesteuerten motorisierten Verschiebung, wobei das Abwärtsverschieben eine Verschiebung der ersten Halterung (5) von der zweiten Struktur (2) weg definiert; und
wobei die Vorrichtung (1) einen dritten Servomotor aufweist, der für ein gesteuertes Verschieben der mit der ersten Halterung (5) in Kontakt stehenden Schiebestange (4) geeignet ist, und wobei der dritte Servomotor auf der ersten Halterung platziert ist, wobei das Verfahren den Schritt des Verschiebens der mit der ersten Halterung in Kontakt stehenden Schiebestange (4) über eine vorbestimmte Strecke zum Zweck der Durchführung von Schritt a.2 aufweist.

11. Verfahren nach Anspruch 10, **dadurch gekennzeichnet, dass** die zweite Struktur der Vorrichtung (1) weiterhin eine dritte Halterung aufweist, die geeignet ist, eine Fallsicherungseinrichtung zu halten, wobei die dritte Halterung ein zweites Verbindungselement aufweist, zum Aufhängen der Fallsicherungseinrichtung an der dritten Halterung, wobei das Verfahren die folgenden Schritte aufweist:
- a.2.1 Verschieben der Fallsicherungseinrichtung auf der zweiten Längsseite der Zeile von Gegenständen nach unten mittels einer durch die Steuereinheit (9) gesteuerten motorisierten Verschiebung der dritten Halterung nach Ausführung des Schritts a.2 gemäß Anspruch 10;
- a.4.1 Verschieben der Fallsicherungseinrichtung auf der zweiten Längsseite der Zeile von Gegenständen nach oben mittels einer durch die Steuereinheit (9) gesteuerten motorisierten Verschiebung der dritten Halterung nach Ausführung des Schritts a.4 gemäß Anspruch 10.

12. Verwendung einer Vorrichtung zum Verschieben einer Zeile von bedruckten Gegenständen von einer Anfangsposition auf einem ersten Band zu einer Endposition auf einem zweiten Band entlang einer Verschieberichtung, **dadurch gekennzeichnet, dass** die Vorrichtung eine Vorrichtung nach einem der Ansprüche 1 bis 7 darstellt.

## Revendications

1. Dispositif (1) destiné à déplacer une rangée d'objets à partir d'une position initiale sur une première bande vers une position finale sur une seconde bande suivant une direction de déplacement, le dispositif (1) comprenant :
- une première structure (2) reposant dans un premier plan sensiblement parallèle à la direction de déplacement, dans lequel la première structure (2) comprend au moins un moyen de guidage (3) qui s'étend dans une première direction ;
- une deuxième structure, comprenant
- un premier support (5) qui est adapté de manière à exécuter un déplacement commandé vers le haut et vers le bas par rapport à la première structure (2), dans lequel le déplacement commandé vers le haut et vers le bas est sensiblement perpendiculaire à la première direction ;
- un deuxième support (7) destiné à guider un mouvement coulissant commandé de la deuxième structure par rapport à la première structure (2) dans la première direction, dans lequel le deuxième support (7) est relié au au moins un moyen de guidage (3) de la première structure (2) ;
- une barre de poussée adaptée de manière à pousser la rangée d'objets à partir de la position initiale vers la position finale, dans lequel la barre de poussée est fixée sur le premier support (5) de la deuxième structure ;
- une troisième structure (6) adaptée de manière à supporter la première structure (2), dans lequel la troisième structure (6) comprend un moyen d'ancrage afin d'assurer le montage du dispositif (1) sur une base fixe,
**caractérisé en ce que** le deuxième support (7) comprend un premier élément de liaison (8) qui est relié au niveau d'une première extrémité externe au premier support (5) afin de suspendre le premier support (5) à partir du deuxième support (7), et **en ce que** le dispositif (1) comprend un troisième servomoteur qui est adapté afin d'assurer une translation commandée de la barre de poussée (4) en contact avec le premier support (5), et dans lequel le troisième servomoteur est placé sur le premier support.

2. Dispositif selon la revendication 1, **caractérisé en ce que** le premier élément de liaison (8) du deuxième support (7) est un élément de liaison rétractable et extensible.

3. Dispositif selon l'une quelconque des revendications précédentes, **caractérisé en ce que** la deuxième structure comprend, en outre, un troisième support qui est relié à un moyen de sécurité contre les chutes, dans lequel le moyen de sécurité contre les chutes est configuré de manière à être placé face à la rangée d'objets dans la direction de déplacement au cours du déplacement de la rangée d'objets à partir de la position initiale vers la position finale, dans lequel le troisième support comprend un second élément de liaison destiné à suspendre le moyen de sécurité contre les chutes sur le troisième support.

4. Dispositif selon l'une quelconque des revendications précédentes, **caractérisé en ce que** la barre de poussée (4) comprend une série de cavités, dans lequel chaque cavité est formée dans le but de recevoir un objet à partir de la rangée d'objets.

5. Dispositif selon l'une quelconque des revendications précédentes, **caractérisé en ce que** le dispositif (1) comprend un premier servomoteur afin de commander le déplacement vers le haut et vers le bas du premier support (5) de la deuxième structure.

6. Dispositif selon l'une quelconque des revendications précédentes, **caractérisé en ce que** le dispositif (1) comprend un deuxième servomoteur afin de commander le mouvement coulissant du deuxième support (7) de la deuxième structure par rapport à la première structure (2) dans la première direction.

7. Dispositif selon l'une quelconque des revendications précédentes, **caractérisé en ce que** le dispositif (1) comprend une unité de commande (9) adaptée de manière à gérer et commander les mouvements du premier support (5), du deuxième support (7) et de la barre de poussée (5).

8. Ensemble destiné à déplacer une rangée d'objets d'une position initiale sur une première bande vers une position finale sur une seconde bande suivant une direction de déplacement, **caractérisé en ce que** l'ensemble comprend un dispositif (1) selon l'une quelconque des revendications précédentes, une première bande étant adaptée de manière à fournir la rangée d'objets, et une seconde bande étant adaptée de manière à recevoir au moins une rangée d'objets déplacée.

9. Ensemble selon la revendication 8, comprenant, en outre, un four destiné à fixer une image sur une surface des objets, dans lequel le four comporte une ouverture destinée à recevoir au moins une partie de la seconde bande.

10. Procédé de déplacement d'une rangée d'objets à partir d'une position initiale sur une première bande vers une position finale sur une seconde bande suivant une direction de déplacement au moyen d'un dispositif (1) selon l'une quelconque des revendications précédentes, le procédé comprenant une étape de déplacement et une étape de retour, l'étape de déplacement comprenant :
- a1. la mise en place du premier support (5) et de la barre de poussée (4) dans une position de poussée au moyen d'un mouvement motorisé, commandé par l'unité de commande (9), dans lequel la position de poussée se trouve sur un premier côté longitudinal de la rangée d'objets sur la première bande, et dans lequel le premier côté longitudinal se trouve à l'opposé d'un second côté longitudinal qui se trouve au niveau de la seconde bande ;
- a2. le couplage de la rangée d'objets sur la première bande au moyen d'un mouvement motorisé, commandé par l'unité de commande (9), du premier support (5) dans la première direction ;
- a3. le déplacement de la rangée d'objets à partir de la première bande vers la position finale sur la seconde bande au moyen d'un mouvement motorisé, commandé par l'unité de commande (9), du deuxième support (7) suivant la première direction ;
dans lequel l'étape de retour comprend les étapes de :
- a4. libération par le premier support (5) de la rangée d'objets dans la position finale sur la seconde bande au moyen d'un court mouvement motorisé, commandé par l'unité de commande (9), du deuxième support (7) à l'opposé de la première direction ;
- a5. déplacement vers le haut au moyen d'un mouvement motorisé, commandé par l'unité de commande (9), du premier support (5), dans lequel le déplacement vers le haut définit un déplacement du premier support (5) vers la première structure (2) ;
- a6. déplacement au moyen d'un mouvement motorisé, commandé par l'unité de commande (9), du deuxième support (7) à l'opposé de la première direction, vers le premier côté longitudinal d'une rangée d'objets nouvellement délivrée ;
- a7. déplacement vers le bas au moyen d'un mouvement motorisé, commandé par l'unité de commande (9), du premier support (5), dans lequel le déplacement vers le bas définit un déplacement du premier support (5) à l'opposé de la deuxième structure (2) ; et
dans lequel le dispositif (1) comprend un troisième servomoteur adapté de manière à assurer une translation commandée de la barre de poussée (4) en contact avec le premier support (5), et dans lequel le troisième servomoteur est placé sur le premier support, le procédé comprend l'étape de glissement de la barre de poussée (4) en contact avec le premier support sur une distance prédéterminée dans le but d'exécuter l'étape a.2.

11. Procédé selon la revendication 10, **caractérisé en ce que** la deuxième structure du dispositif (1) comprend, en outre, un troisième support adapté afin de maintenir un moyen de sécurité contre les chutes, dans lequel le troisième support comprend un second élément de liaison destiné à suspendre le moyen de sécurité contre les chutes à partir du troisième support, le procédé comprenant les étapes de :
- a.2.1 déplacement du moyen de sécurité contre les chutes sur le second côté longitudinal de la rangée d'objets vers le bas au moyen d'un mouvement motorisé, commandé par l'unité de commande (9), du troisième support après exécution de l'étape a.2 selon la revendication 10 ;
- a.4.1 déplacement du moyen de sécurité contre les chutes sur le second côté longitudinal de la rangée d'objets vers le haut au moyen d'un mouvement motorisé, commandé par l'unité de commande (9), du troisième support après exécution de l'étape a.4 selon la revendication 10.

12. Utilisation d'un dispositif destiné à déplacer une rangée d'objets imprimés à partir d'une position initiale sur une première bande vers une position finale sur une seconde bande suivant une direction de déplacement, **caractérisée en ce que** le dispositif est un dispositif selon l'une quelconque des revendications 1 à 7.
